# EUROPEAN PATENT APPLICATION

(11) **EP 4 629 613 A1**
(43) Date of publication of application: **08.10.2025**
(21) Application number: 25163126.3
(22) Date of filing: 11.03.2025
(51) Int. Cl.: H04N 17/06, H04N 5/76, H04N 9/79

(54) **HIGH-SPEED CAMERA**

(30) Priority: 12.03.2024 JP 2024038499
(71) Applicant: Nac Image Technology Inc., Tokyo 107-0061 (JP)
(72) Inventor: HAYASHI, Mitsuo, Tsuzuki-ku Yokohama-shi (JP)
(74) Representative: Kronthaler, Schmidt & Coll.

(57) **Abstract**

A conventional high-speed camera may be unable to video-record a required number of image frames. A high-speed camera according to the present invention includes a video recording memory that is divided into a plurality of segments and into which writing is performed in a ring buffer shape, a video recording unit that sequentially preforms video recording in the video recording memory and stops, when a predetermined number of image frames previously set are video-recorded, the video recording on the basis of input of a trigger signal, to leave the predetermined number of image frames in the video recording memory, region information management means for storing segment information and image frame information about in which of the segments image frames are recorded and which of the image frames is recorded in the segment, and image frame management means for acquiring previously set predetermined numbers of image frames respectively preceding and succeeding an image frame at the time when a trigger signal is inputted in the certain segment on the basis of image frame information of the segment into which the trigger signal is inputted and image frame information of the other segment that are stored by the region information management means.

## Description

### TECHNICAL FIELD OF THE INVENTION

The present invention relates to a high-speed camera, and particularly, to a high-speed camera enabling continuous video recording.

### BACKGROUND OF THE INVENTION

### Description of Configuration of General Digital High-Speed Camera

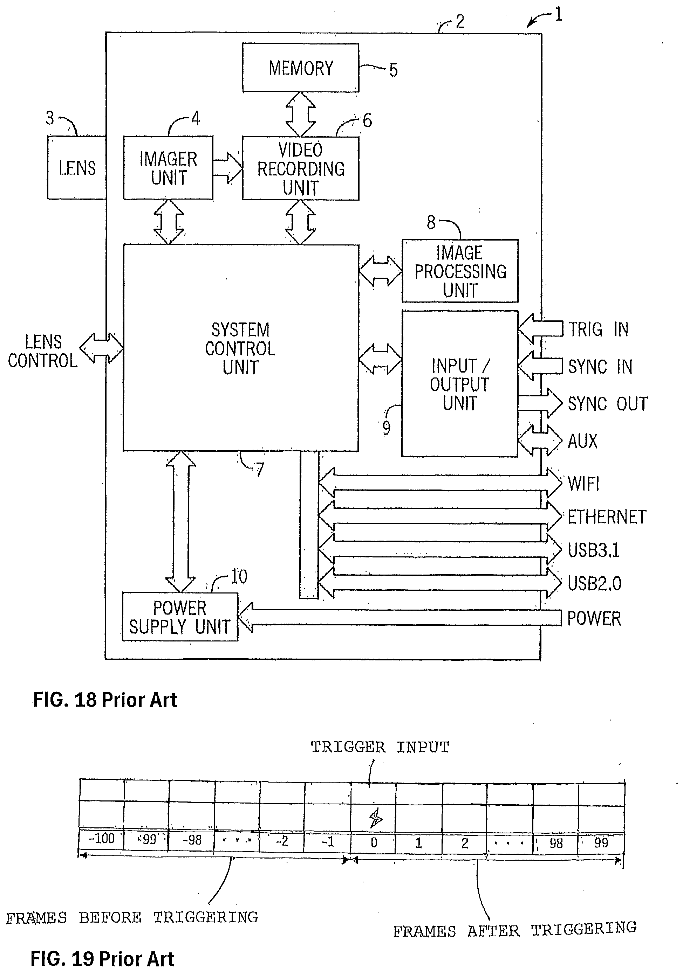

FIG. 18 illustrates a configuration of a general digital high-speed camera 1. The digital high-speed camera 1 includes a camera body 2, a photographic lens 3, and the like. Some cameras have no photographic lens 3 but use other optical systems.

The camera body 2 includes an imager unit 4 composed of, for example, an image sensor that images a target video image by sequentially performing an exposure at a set exposure timing, a video recording memory 5 composed of, for example, a DRAM formed to perform video recording in a ring buffer shape, a video recording unit 6 that sequentially video-records the video image imaged by the imager unit 4 as an image frame of digital data in the video-recording memory 5 and stops, when a predetermined number of image frames are video-recorded, the video recording in the video recording memory 5 by input of a trigger signal described below to stop overwriting, to leave a video image as the predetermined image frame in the video recording memory 5, a system control unit 7 that includes, for example, a timer for managing a time, a CPU, and a RAM and a ROM including software, which are related to its operation, and performs or causes them to perform various types of calculation and storage, an image processing unit 8 composed of, for example, a DSP and a GPU, an input/output unit 9 that inputs and outputs an external signal, and a power supply unit 10 that supplies power to the camera body 2.

In FIG. 18, the imager unit 4, the video recording unit 6, the image processing unit 8, the input/output unit 9, the power supply unit 10, and the like are described as being separate from the system control unit 7. However, some or all of the imager unit 4, the video recording unit 6, the image processing unit 8, the input/output unit 9, the power supply unit 10, and the like may constitute a part of the system control unit 7.

### Description of Method for Video Recording in Video Recording Memory 5 by Video Recording Unit 6

**In** the conventional digital high-speed camera 1 that performs recording in a memory, the video recording memory 5 having a ring buffer shape is formed such that image frames are sequentially written from the beginning of its storage region and are sequentially written by overwriting from the beginning of the storage region immediately when written to the end thereof, and the overwriting is repeated until video recording is stopped.

For example, the video recording unit 6 writes an image imaged and converted into digital data by sequentially performing an exposure at a set predetermined exposure timing in a ring buffer shape into the video recording memory 5.

The video recording unit 6 is provided with a video-recorded image frame number setting unit that previously sets the number of image frames for recording predetermined numbers of image frames respectively preceding and succeeding an image frame at the time when a trigger signal is inputted (a trigger frame).

A recording stop unit provided in the video recording unit 6 stops writing (video recording) after the predetermined number of images succeeding the trigger frame, which are set by the video-recorded image frame number setting unit so that the predetermined numbers of image frames respectively preceding and succeeding the trigger frame can be recorded.

The number of image frames previously set by the video-recorded image frame number setting unit is set to, for example, the same number as the maximum number of image frames that can be written into all storage regions of the video recording memory 5 (in a range where overwriting is not performed) so that the video recording memory 5 is effectively utilized.

The number of image frames previously set by the video-recorded image frame number setting unit may be less than the maximum number of image frames that can be written into all the storage regions of the video recording memory 5 (in the range where overwriting is not performed).

For example, there is a general high-speed shooting function (hereinafter referred to as normal recording) for recording previously set predetermined numbers of written images respectively before and after the time of the trigger signal input (100 frames before triggering and 100 frames after triggering (including a trigger frame at the time of the trigger signal input in this example) as consecutive image frames in the recording memory 5, as illustrated in FIG. 19.

The trigger frame may be included in either one of respective representations before and after triggering. Alternatively, the trigger frame may be included in neither one of the respective representations so that the trigger frame is used as a reference to separate the representations.

The video-recorded image frame number setting unit may set the previously set predetermined numbers of image frames respectively before or after the time of the trigger signal input, excluding the trigger frame, to zero.

In the drawings, a zigzag-type symbol indicates trigger signal input.

Examples of trigger signal input means for inputting the trigger signal include a case where a trigger signal is inputted into the video recording unit 6 via a circuit inside the camera body 2 from a TRIG IN connector to the input/output unit 9 from outside the high-speed camera 1 and a case where the system control unit 7 inside the high-speed camera 1 generates a CPU trigger.

There is a case where a storage region of the video recording memory 5 in the high-speed camera 1 is divided into a plurality of segments (storage regions) and each of the segments obtained by the division consecutively shifts to the next segment in order (that is, immediately shifts to the next segment without any one image frame missed) so that writing can be performed.

That is, when writing is performed in the first segment and the writing is stopped after a first trigger signal is inputted and a predetermined number of image frames are reached, the first segment immediately automatically shifts in writing to the next segment, thereby enabling video recording by input of a next trigger signal.

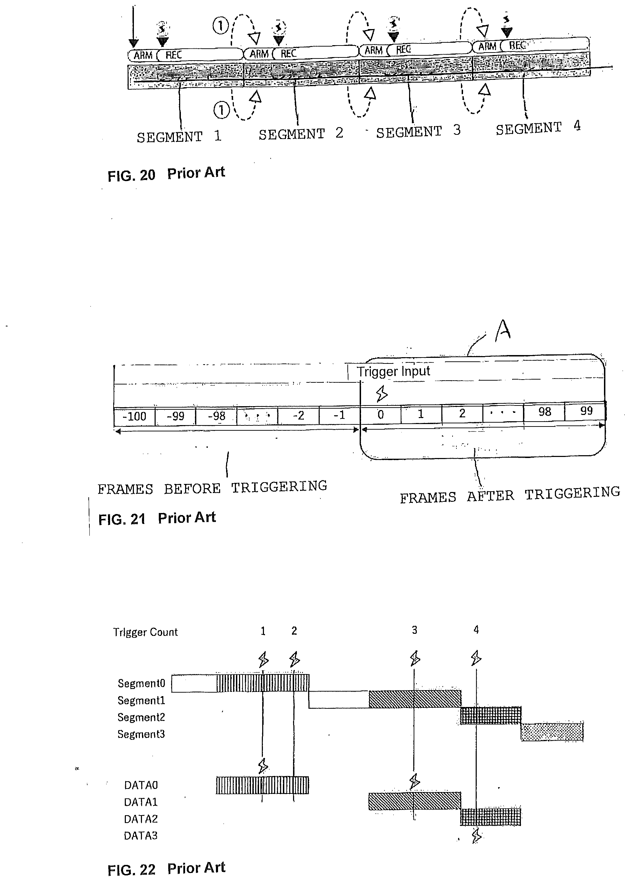

This makes it possible to input a trigger signal for each segment and makes it possible to perform normal recording corresponding to the number of segment divisions, as illustrated in FIG. 20. This also enables continuous normal recording (hereinafter referred to as continuous recording).

For example, a general high-speed video camera is disclosed in Japanese Patent No. 4657379.

### SUMMARY OF THE INVENTION

However, in the conventional video camera, a time period elapsed until writing of predetermined image frames into a current segment during video recording is completed after trigger signal input (image frames within a frame A in the drawing) is a time period during normal recording in the current segment, as illustrated in FIG. 21. Accordingly, even if a further trigger signal is inputted, recording may be unable to be performed. Therefore, the segment may be missed for the further trigger signal input.

If the trigger signal input is performed immediately after the segment shifts to the next segment, for example, some image frames before the trigger signal input have not been recorded in the next segment. Therefore, it cannot be ensured that all predetermined numbers of image frames respectively before and after the trigger signal input are recorded.

For example, FIG. 22 illustrates image frame data video-recorded by each trigger signal input when video recording is performed with the conventional high-speed camera. In this example, such setting is performed that the same numbers of image frames can be respectively video-recorded before and after the trigger signal input. The video recording memory 5 is divided into four segments. Respective names of the four segments are set as a segment 0, a segment 1, a segment 2, and a segment 3, into which images are written in this order. FIG. 22 illustrates an example in which the trigger signal input is performed four times.

An upper stage of FIG. 22 is a transition diagram illustrating a video recording state in each of segments with respect to a time axis. A patterned portion of each of the segments remains as a video-recorded image. An unpatterned portion indicates that an image is erased by being overwritten.

In a lower stage of FIG. 22, data of image frames video-recorded in each of the segments are respectively indicated by DATA0 to DATA3.

As illustrated in FIG. 22, in a conventional method, video-recorded frame data and a shooting scene of each of the segments match each other.

First, images are written in a ring buffer shape into the segment 0. Due to the first trigger signal input, a predetermined number of image frames after the trigger signal input, which are previously set by the video-recorded image frame number setting unit, are video-recorded, and then the video recording in the segment 0 is finished by the video recording stop unit. The predetermined image frames respectively before and after the trigger signal input are each video-recorded as DATA0.

The second trigger signal input is ignored because it has been performed during the video recording in the segment 0.

When the video recording in the segment 0 is finished, images are written in a ring buffer shape into the next segment 1. Due to the third trigger signal input, a predetermined number of image frames after the trigger signal input are video-recorded, and then the video recording in the segment 1 is finished. The predetermined image frames respectively before and after the trigger signal input are each video-recorded as DATA1.

When the video recording in the segment 1 is finished, images are written into the next segment 2. Due to the fourth trigger signal input, a predetermined number of image frames after the trigger signal input are video-recorded, and then the video recording in the segment 2 is finished.

However, a time period elapsed until the trigger signal input from the start of the video recording in the segment 2 is short. Accordingly, only a predetermined number of image frames before the trigger signal input have been recorded. Therefore, image frames, the number of which is small, are each video-recorded as DATA2.

When the video recording in the segment 2 is finished, images are written in a ring buffer shape into the next segment 3. The images are written until the next trigger signal input is performed.

As described above, the trigger signal input is ignored depending on a trigger signal input timing so that video recording may not be performed. A specified predetermined number of image frames may be unable to be video-recorded as image frames respectively before and after the trigger signal input.

The present invention is directed to eliminating the above-described disadvantages.

A high-speed camera according to the present invention includes an imager unit that sequentially images a target video image at a set exposure timing, a video recording memory that is divided into a plurality of segments, each of the segments consecutively shifting to the next segment in order so that writing is performed thereinto, the writing into each of the segments being performed and overwriting is performed in a ring buffer shape until the writing is stopped, a video recording unit that sequentially video-records the video image imaged by the imager unit as an image frame of digital data into the video recording memory and stops, when video-recording a predetermined number of image frames set in a video recording stop unit, the video recording in the video recording memory using the video recording stop unit on the basis of input of a trigger signal, to leave the predetermined number of image frames in the video recording memory, a video-recorded image frame number setting unit in which predetermined numbers of image frames, respectively preceding and succeeding the image frame at the time when the trigger signal is inputted, to be recorded on the basis of the input of the trigger signal are previously set, region information management means for storing segment information about in which of the segments the image frames are recorded and image frame information about in which of positions of each of the segments each of the image frames is recorded, and image frame management means for acquiring the predetermined numbers of image frames respectively preceding and succeeding the image frame at the time when the trigger signal is inputted in the certain segment, which are previously set by the video-recorded image frame number setting unit, on the basis of image frame information of the segment into which the trigger signal is inputted and image frame information of the other segment that are stored by the region information management means.

The image frame information is a position of each of the image frames in each of the segments, the region information management means is configured to store, for each of the segments, a position in the segment of each of the image frames recorded in the segment after the stop of video recording, and the image frame management means is configured, in order to acquire the predetermined numbers of image frames respectively preceding and succeeding the trigger frame at the time when the trigger signal is inputted, which are previously set by the video-recorded image frame number setting unit, to supplement, in addition to a position of each of the image frames in the segment into which the trigger signal is inputted, which are stored by the region information management means, a position of the image frame that cannot be video-recorded in the segment including the trigger frame with a position of each of image frames in the other segment.

The high-speed camera further includes sequence number management means for assigning a sequence number in order to each of the image frames sequentially video-recorded in each of the segments that consecutively shifts to the next segment so that video recording is sequentially performed therein, in which the image frame information is a sequence number assigned for each of the segments by the sequence number management means, the region information management means is configured to store, for each of the segments, a sequence number assigned to each of the image frames recorded in the segment after the stop of the video recording, and the image frame management means is configured, in order to acquire the predetermined numbers of image frames respectively preceding and succeeding the trigger frame at the time when the trigger signal is inputted, which are previously set by the video-recorded image frame number setting unit, to supplement, in addition to a sequence number assigned to each of the image frames in the segment into which the trigger signal is inputted, which are stored by the region information management means, a sequence number assigned to the image frame that cannot be video-recorded in the segment including the trigger frame with a sequence number assigned to each of image frames in the other segment.

The high-speed camera further includes pseudo trigger signal input means for issuing, when trigger signals are inputted in an overlapping manner in each of the segments and each of the segments consecutively shifts to the next segment, a pseudo trigger signal to the video recording unit.

The pseudo trigger signal input means includes delay management means for causing, when the first trigger signal is inputted in each of the segments, a delay state and resolving, when video recording in the current segment during video recording, the delay state, and overlapping management means for causing, when the new trigger signal is inputted during the delay state, an overlapping state, stopping the video recording in the current segment during video recording, inputting a pseudo trigger signal into the video recording unit when the current segment consecutively shifts in video recording to the next segment, and resolving, when the pseudo trigger signal is inputted, the overlapping state.

The predetermined number of image frames set in the video recording stop unit are set to a required number of image frames succeeding the image frame at the time when the trigger signal is inputted, which are previously set by the video-recorded image frame number setting unit.

The video recording stop unit is provided with a determination unit that determines, when the predetermined number of image frames set in the video recording stop unit are video-recorded in the segment, whether or not there is a region where video recording has not been performed in the segment, the video recording stop unit stops, when the determination unit determines that there is no region where video recording has not been performed, the video recording when the predetermined number of image frames set in the video recording stop unit are video-recorded, and the video recording stop unit is set to stop, when the determination unit determines that there is a region where video recording has not been performed, the video recording after the predetermined number of image frames are written up to the region where video recording has not been performed.

The pseudo trigger signal input means is provided with pseudo trigger signal input determination means for determining whether or not a pseudo trigger signal is inputted into the next segment.

The video recording stop unit is provided with a determination unit that determines, when the predetermined number of image frames set in the video recording stop unit are video-recorded in the segment, whether or not there is a region where video recording has not been performed in the segment, the video recording stop unit stops, when the determination unit determines that there is no region where video recording has not been performed, the video recording when the predetermined number of image frames set in the video recording stop unit are video-recorded, the video recording stop unit is set to stop, when the determination unit determines that there is a region where video recording has not been performed, the video recording after the predetermined number of image frames are written up to the region where video recording has not been performed, and the pseudo trigger signal input means is provided with pseudo trigger signal input determination means for determining whether or not a pseudo trigger signal is inputted into the next segment.

With a high-speed camera according to the present invention, it is possible to record predetermined numbers of image frames respectively before and after trigger signal input at any trigger signal input timing.

### BRIEF DESCRIPTIONS OF THE DRAWINGS

FIG. 1 is a configuration diagram of a high-speed camera according to an embodiment of the present invention;
FIG. 2 is an explanatory diagram illustrating a first embodiment of the present invention on the basis of positions in a segment;
FIG. 3 is an explanatory diagram illustrating the first embodiment of the present invention on the basis of positions in a segment;
FIG. 4 is an explanatory diagram illustrating the first embodiment of the present invention on the basis of positions in a segment;
FIG. 5 is an explanatory diagram illustrating the first embodiment of the present invention on the basis of positions in a segment;
FIG. 6 is an explanatory diagram illustrating the first embodiment of the present invention on the basis of positions in a segment;
FIG. 7 is an explanatory diagram illustrating the first embodiment of the present invention on the basis of sequence numbers;
FIG. 8 is an explanatory diagram illustrating the first embodiment of the present invention on the basis of sequence numbers;
FIG. 9 is an explanatory diagram illustrating the first embodiment of the present invention on the basis of sequence numbers;
FIG. 10 is an explanatory diagram illustrating the first embodiment of the present invention on the basis of sequence numbers;
FIG. 11 is an explanatory diagram illustrating the first embodiment of the present invention on the basis of sequence numbers;
FIG. 12 is an explanatory diagram illustrating the first embodiment of the present invention on the basis of sequence numbers;
FIG. 13 is a transition diagram of a video recording operation by trigger signal input into each segment in a new method 1 according to the first embodiment of the present invention;
FIG. 14 is an explanatory diagram illustrating a second embodiment of the present invention on the basis of positions in a segment;
FIG. 15 is an explanatory diagram illustrating the second embodiment of the present invention on the basis of sequence numbers;
FIG. 16 is an explanatory diagram illustrating the second embodiment of the present invention on the basis of sequence numbers;
FIG. 17 is a transition diagram of a video recording operation by trigger signal input into each segment in a new method 2 according to the second embodiment of the present invention;
FIG. 18 is a configuration diagram of a high-speed camera according to a conventional example;
FIG. 19 is an explanatory diagram illustrating a video recording state of image frames in trigger signal input;
FIG. 20 is an explanatory diagram illustrating a video recording state in a case where a memory is divided into four segments;
FIG. 21 is an explanatory diagram illustrating a case where a new trigger signal is inputted during a conventional video recording state; and
FIG. 22 is a transition diagram of a conventional video recording operation by trigger signal input into each segment.

### DESCRIPTIONS OF THE PREFERRED EMBODIMENTS

Preferred embodiments of a high-speed camera according to the present invention will be described below with reference to the drawings. The high-speed camera according to the present invention is not limited to the following description, but can be appropriately changed without departing from the spirit and scope of the present invention.

The same units as those described in the conventional technique are respectively denoted by the same reference numerals, and descriptions thereof are omitted.

### First Embodiment

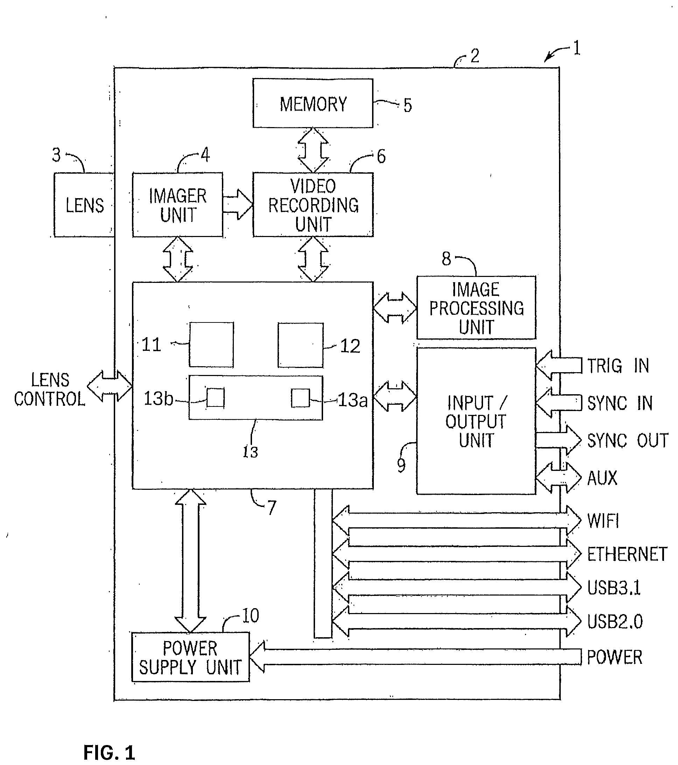

FIG. 1 illustrates a configuration of a high-speed camera according to an embodiment of the present invention.

### Description of Overall Configuration of Invention

In the present invention, a storage region of a video recording memory 5 is divided into a plurality of segments (storage regions), and image frames are written (writing is performed into the segments obtained by the division consecutively in order (i.e., by each of the segments immediately shifting to the next segment without any one of the image frames missed) in the conventional high-speed camera 1.

For example, a system control unit 7 is provided with region information management means 11 for storing segment information about in which of the segments the image frames are recorded and image frame information about in which of positions of each of the segments each of the image frames is recorded.

For example, the system control unit 7 is provided with image frame management means 12 for acquiring previously set predetermined numbers of image frames, to be recorded, respectively preceding and succeeding an image frame at the time when a trigger signal is inputted (a trigger frame) in the certain segment on the basis of image frame information of the segment into which the trigger signal is inputted and image frame information of the other segment that are stored by the region information management means 11.

That is, if all of the predetermined number of image frames based on the trigger frame into which the trigger signal is inputted cannot be obtained only in the segment into which the trigger signal is inputted, required image frames are supplemented with the adjacent segment by the image frame management means 12 so that all the predetermined number of image frames to be required can be acquired for each trigger signal input.

In the conventional technique, required image frames to be video-recorded based on trigger signal input are acquired for each segment into which a trigger signal is inputted. Accordingly, a predetermined number of image frames are not recorded depending on the time of the trigger signal input so that all the image frames to be required cannot be recorded.

That is, if a trigger signal is inputted immediately after a segment shifts to a next segment, for example, a predetermined number of image frames preceding an image frame into which the trigger signal is inputted are not recorded in the next segment. Accordingly, only some of the image frames can be recorded.

Therefore, in the present invention, the image frame management means 12 is provided, thereby making it possible to supplement, in addition to image frame information of a segment into which a trigger signal is inputted, required image frame information with image frame information respectively recorded in other segments such as segments respectively preceding and succeeding the segment and acquire a required number of image frames for each trigger signal input on the basis of the image frame information.

**In** the present invention, the image frame management means 12 is provided, thereby making it possible to record all the required number of image frames corresponding to the trigger signal.

### Example of Segment Information in Region Information Management Means 11

Examples of segment information in the region information management means 11 include a position (memory address) of each of segments in the video recording memory 5, a video recording order of each of the segments, and an identification name set in each of the segments.

The region information management means 11 stores segment information of each of segments obtained by division.

### Example of Image Frame Information in Region Information Management Means 11

Examples of image frame information in the region information management means 11 include a position of each of image frames in each of segments.

The region information management means 11 stores image frame information of each of required image frames video-recorded for each of the segments.

In this example, in order to acquire previously set predetermined numbers of image frames respectively preceding and succeeding a trigger frame at the time when a trigger signal is inputted, the image frame management means 12 supplements, in addition to the position of each of the image frames in the segment into which the trigger signal is inputted, which is stored by the region information management means 11, the position of each of the image frames, which cannot be stored in the segment, with a position of each of image frames in the other segment, thereby acquiring a required number of image frames.

### Another Example of Region Information Management Means 11

As the above-described image frame information, a position in each of the segments may be replaced, by separately providing sequence number management means for respectively assigning sequence numbers to the image frames sequentially video-recorded in order in each of the segments, with the sequence number stored for each of the segments.

The region information management means 11 stores image frame information of each of required image frames video-recorded for each of the segments.

In the other example, in order to acquire previously set predetermined numbers of image frames respectively preceding and succeeding a trigger frame at the time when a trigger signal is inputted, the image frame management means 12 supplements, in addition to the sequence number assigned to each of the image frames in the segment into which the trigger signal is inputted, which is stored by the region information management means 11, the sequence number assigned to each of the image frames, which cannot be stored in the segment, with a sequence number assigned to each of image frames in the other segment, thereby acquiring a required number of image frames.

### Description of Pseudo Trigger Signal Input Means 13

The system control unit 7 is further provided with pseudo trigger signal input means 13 for inputting, when trigger signals are issued to the video recording unit 6 in an overlapping manner in each of the segments and the segment shifts to the next segment, a pseudo trigger signal into the video recording unit 6.

The pseudo trigger signal input means 13 includes, for example, delay management means 13a for causing, when the first trigger signal is inputted in each of the segments, a delay state and resolving, when video recording that is being performed in the current segment is stopped, the delay state, and overlapping management means 13b for causing, when the new trigger signal is inputted during the delay state, an overlapping state, inputting, when the video recording that is being performed in the current segment is stopped and the segment consecutively shifts in video recording to the next segment, a pseudo trigger signal into the video recording unit 6 and resolving, when the pseudo trigger signal is inputted, the overlapping state.

In the conventional technique, if trigger signals are inputted into the same segment in an overlapping manner, video recording of a predetermined number of image frames into a segment is finished, and then the video recording in the segment is finished by a video recording stop unit on the basis of the input of the first trigger signal, and video recording in the next segment is started.

In this case, the video recording of a required number of image frames based on the input of the later trigger signal in the segment has been finished. Accordingly, the required number of image frames are not left.

In the next segment in which the video recording is started, if a trigger signal is not inputted, video-recorded image frames are overwritten in a ring buffer shape. Accordingly, the required number of image frames based on the input of the later trigger signal cannot be left.

In the present invention, if trigger signals are inputted in an overlapping manner in each of the segments, when video recording in the next segment is started, a pseudo trigger signal is inputted into the next segment. A video recording stop unit stops, after a predetermined number of image frames previously set by a video-recorded image frame number setting unit are video-recorded, the video recording so that the video-recorded image frames are not overwritten, thereby making it possible to record a required number of image frames based on the later trigger signal.

That is, when a first trigger signal is inputted into the video recording unit 6 during video recording in a certain segment, writing into the certain segment is finished when video recording of image frames, the number of which is set by the video-recorded image frame number setting unit, is finished on the basis of the input of the first trigger signal, and overwriting into the certain segment is stopped, to immediately start video recording in the next segment.

In the certain segment, a predetermined number of image frames are recorded on the basis of the first trigger signal. The region information management means 11 manages recording of the image frames using their respective positions and sequence numbers in the segment.

Due to the first trigger signal input, a delay state occurs by the delay management means 13a. When the segment shifts in writing to the next segment, the delay state is resolved.

When a new trigger signal is inputted in the delay state, the overlapping management means 13b inputs, when the segment shifts to the next segment, a pseudo trigger signal into the video recording unit 6, and stops, after writing of a predetermined number of image frames is finished, the writing, to stop overwriting into the next segment.

The image frame management means 12 manages required image frames from image frame information of the segment at the time when the new trigger signal is inputted and image frame information of the next segment.

When the overwriting into the next segment is stopped, writing into the further next segment is started.

When the new trigger signal is inputted, the number of image frames, which stop being written into the certain segment by the image stop unit based on the first trigger signal, has already been set. Accordingly, the efficacy of the new trigger signal for stopping the video recording in the certain segment is ignored.

When the pseudo trigger signal is inputted into the next segment, a delay state occurs by the delay management means 13a. When the next segment shifts in writing to the further next segment, the delay state is resolved.

In the further next segment, the writing is performed until a trigger signal is inputted. If the trigger signal is inputted, the above-described processes are repeated.

For example, when the segment shifts in video recording to the next segment by the overlapping management means 13b, the video recording stop unit in the video recording unit 6 may stop, instead of stopping the video recording after image frames, the number of which is set by the video-recorded image frame number setting unit, are video-recorded in the next segment on the basis of the inputted pseudo trigger signal, the video recording after image frames with which image frames recorded in the segment into which the trigger signal is inputted, the number of which is short of the set number, are supplemented, are video-recorded.

That is, the video recording stop unit may stop, after image frames, the number of which is found by subtracting the number of image frames between the image frame into which the new trigger signal is inputted and the image frame at the time when video recording is finished in the certain segment from the number of image frames set by the video-recorded image frame setting unit, are video-recorded in the next segment, the video recording.

In a case where the segment shifts to the next segment with a region where video recording has not been performed (a video recording uncompleted region) left in the segment, e.g., the above described case, a video recording uncompleted region in the next segment may be subdivided into one or a plurality of segments such that a point where the video recording is stopped is the beginning of the new segment so that each of the segments obtained by the sub-division immediately shifts to the next segment in order and the next segment consecutively shifts to the further next segment to enable writing.

**In** this case, the video recording uncompleted region can be eliminated, thereby making it possible to effectively utilize the video recording memory 5.

Required numbers of image frames respectively preceding and succeeding the trigger frame into which the trigger signal is inputted, which are set in the video-recorded image frame number setting unit, are recorded.

### Description of First Embodiment of Invention Using Case Where Image Frame Information is Position in Segment

Then, the first embodiment of the present invention will be described using a case where image frame information is set as a position in a segment.

The video recording memory 5 is divided into three segments "A", "B", and "C", for example. In the segments "A", "B", and "C", video recording starts to be consecutively performed in this order. Each of the segments is a ring buffer corresponding to 10 image frames. An image frame into which a trigger signal is inputted (a trigger frame) and four image frames and five image frames respectively succeeding and preceding the trigger frame (hereinafter referred to as 10 image frames in the vicinity of a trigger), which are set by the video-recorded image frame number setting unit, are recorded.

The video recording stop unit is set to stop, after the trigger signal is inputted, video recording in the image frame succeeding the trigger frame by four image frames, the number of which is the same as the number previously set by the video-recorded image frame number setting unit, and the segment shifts to the next segment.

The final segment may shift to the first segment, or the video recording may be stopped in the final segment.

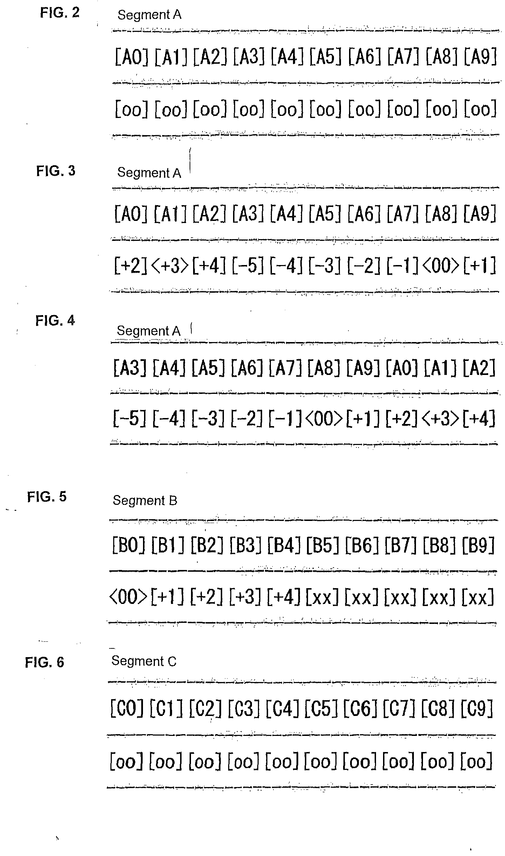

As illustrated in FIG. 2, in the segment "A", video recording is started in such setting that imaged image frames are sequentially written in a ring buffer shape, respectively, into 10 image frame regions [A0] to [A9] on a video recording memory.

The imaged image frames are sequentially written into the segment A by overwriting.

In FIGs. 2 to 6, an upper stage and a lower stage respectively indicate a position of each of image frame regions in each of segments and a video recording state, and [oo] indicates a state where a video-recorded image frame is overwritten.

FIG. 3 illustrates, for example, a case where a first trigger signal is inputted at a timing at which an image frame is written into the image frame region [A8] in the segment A and a new trigger signal is inputted at a timing at which an image frame is written into the subsequent image frame region [A1].

In the drawings, <> indicates that a trigger signal is inputted.

A number in the lower stage in FIGs. 3 to 5 indicates an order of a video-recorded image frame preceding and succeeding the trigger frame set by the video-recorded image frame number setting unit.

As illustrated in FIG. 3, at a time point where a first trigger signal is inputted in the image frame region [A8], image frames are respectively written into the four image frame regions [A9], [A0], [A1], and [A2] set by the video recording stop unit, and then the writing is stopped in the image frame region [A2]. In the segment A, required image frames respectively remain in the image frame regions [A3], [A4], [A5], [A6], [A7], [A8], [A9], [A0], [A1], and [A2] based on the first trigger signal.

FIG. 4 illustrates a position of an image frame region corresponding to each of video-recorded image frames that are expressed in chronological order.

Immediately after writing into the segment A is stopped, writing into the next segment B is started.

In the conventional technique, a new trigger signal inputted at a time point of an image frame region [A1] is ignored because video recording in a segment A is being performed.

Even if the new trigger signal is received, writing is stopped in an image frame region [A2] in the video recording in the segment A. Accordingly, even if image frames respectively corresponding to image frame regions [A6], [A7], [A8], [A9], [A0], [A1], and [A2] in the segment A have been recorded in the segment A, the image frames in a segment B are overwritten in a ring buffer shape because a trigger signal is not inputted into the segment B. Accordingly, image frames respectively corresponding to required image frame regions [B0], [B1], and [B2] based on input of the new trigger signal cannot be left.

In the present invention, when the second trigger signal is inputted into the segment A so that an overlapping state occurs, a pseudo trigger signal is automatically inputted into the video recording unit by the pseudo trigger signal input means 13 in a first image frame region [B0] in the segment B, as illustrated in FIG. 5 so that the predetermined number of image frames are recorded, and then writing into the segment so that the recorded image frames are not overwritten.

In FIG. 5, [xx] in the segment B indicates that no image has entered image frame regions [B5] to [B9].

Due to input of the pseudo trigger signal, after a set number of image frames (e.g., last five image frames including a trigger) are written up to the image frame region [B4], the writing is stopped by the video recording stop unit under the same rule as that of a normal trigger signal, for example. Then, writing into the segment "C" is started, as illustrated in FIG. 6.

### Description of First Embodiment of Invention Using Case where Image Frame Information is Sequence Number

Then, the first embodiment of the present invention will be described using a case where image frame information is set as a sequence number.

The video recording memory 5 is divided into three segments "A", "B", and "C", for example. In the segments "A", "B", and "C", video recording starts to be consecutively performed in this order. Each of the segments is a ring buffer corresponding to 10 image frames. An image frame into which a trigger signal is inputted (a trigger frame) and four image frames and five image frames respectively succeeding and preceding the trigger frame (hereinafter referred to as 10 image frames in the vicinity of a trigger), which are set by the video-recorded image frame number setting unit, are recorded.

The video recording stop unit is set to stop, after the trigger signal is inputted, video recording in the image frame succeeding the trigger frame by four image frames, the number of which is the same as the number previously set by the video-recorded image frame number setting unit, and the segment immediately shifts to the next segment.

The final segment may shift to the first segment, or the video recording may be stopped in the final segment.

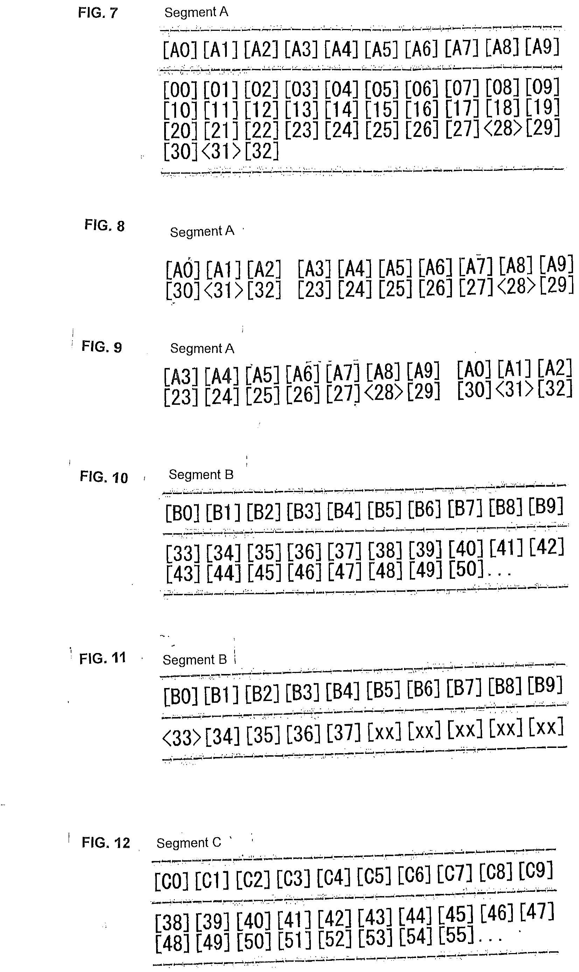

As illustrated in FIG. 7, in the segment "A", video recording is started in such setting that imaged image frames are sequentially written in a ring buffer shape, respectively, into 10 image frame regions [A0] to [A9] on a video recording memory.

The sequence number management means respectively assigns sequence numbers [00], [01] [02], ... in order to the imaged image frames.

The imaged image frames are sequentially written into the segment A by overwriting.

FIG. 7 illustrates, for example, a case where a trigger signal is inputted, at respective timings of the sequence number <28> of the third round and the sequence number <31> of the fourth round, which are recorded in a ring buffer shape, into the image frames respectively corresponding to the sequence numbers.

At a time point where the trigger signal is inputted in the sequence number <28>, the writing is stopped in the sequence number <32> succeeding the sequence number <28> by four image frames set in the video recording stop unit. In the segment A, the image frames respectively corresponding to the sequence numbers [23] to [32] are left.

As a memory arrangement of the segment A, image frames corresponding to a series of sequence numbers are left, as illustrated in FIG. 8.

FIG. 9 illustrates a series of sequence numbers corresponding to video-recorded image frames that are expressed in chronological order.

After the writing into the segment A is stopped, writing into the next segment B is started. Numbers [33], [34] [35], ... are sequentially assigned in order, respectively, to imaged image frames, as illustrated in FIG. 10, by the sequence number management means.

In the conventional technique, a new trigger signal inputted at a time point of a sequence number <31> is ignored because video recording in a segment A is being performed.

Even if the new trigger signal is received, and image frames respectively corresponding to sequence numbers [26] to [32] among a series of sequence numbers [26] to [35] to be required are recorded in the segment A, the image frames in the segments B are overwritten in a ring buffer shape, as illustrated in FIG. 10, because a trigger signal is not inputted into a segment B. Accordingly, image frames respectively corresponding to sequence numbers [33] to [35] cannot be left.

In the present invention, when the second trigger signal is inputted into the segment A so that an overlapping state occurs, a pseudo trigger signal is automatically inputted into the video recording unit by the pseudo trigger signal input means 13 in a first sequence number <33> in the segment B so that writing into the segment B is stopped, to prevent overwriting as illustrated in FIG. 11.

In FIG. 11, [xx] in the segment B indicates that no image has entered image frame regions [B5] to [B9].

Due to the pseudo trigger signal inputted into the sequence number <33>, after a set number of image frames (e.g., last five image frames including a trigger) are written up to the sequence number [37], the writing is stopped by the video recording stop unit under the same rule as that of a normal trigger signal inputted into the sequence number <28>. Then, writing into the segment "C" is started, as illustrated in FIG. 12.

### Description Based on Frame Data in First Embodiment of Invention

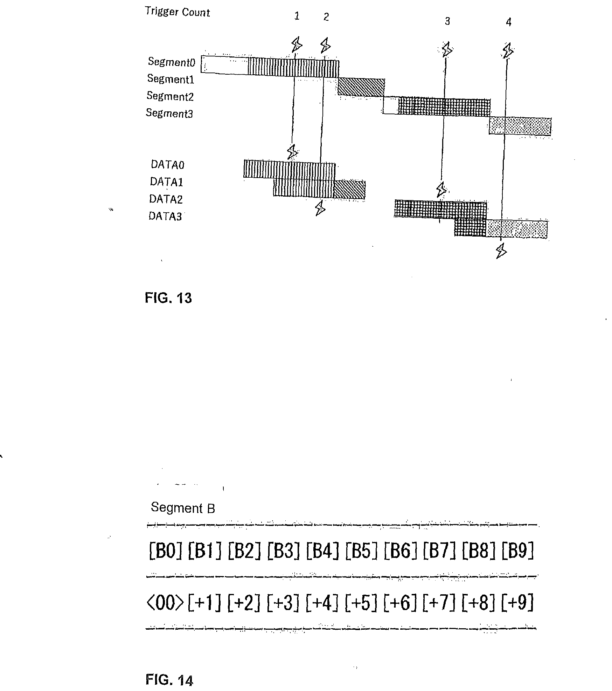

FIG. 13 is a diagram illustrating image frame data recorded in each of segments when each trigger signal is inputted into the segment as a new method according to the first embodiment of the present invention. A video recording operation by trigger signal input into each segment will be specifically described with reference to the drawing.

An example in which such setting is performed that the same numbers of image frames can be respectively video-recorded before and after the trigger signal input, the number of the segments is set to four, and the trigger signal input is performed four times is illustrated. Periods during which video recording is performed in each of the segments are respectively indicated by a segment 0 to a segment 3. A patterned portion remains as a video recording memory, and an unpatterned portion indicates that images have been erased by being overwritten. Image frame data to be managed as a shooting scene are respectively indicated by data 0 to data 3.

As illustrated in FIG. 13, in the new method, each of the segments and the shooting scene do not necessarily match each other.

First, images are written in a ring buffer shape into a segment 0. An image frame into which a first trigger signal is inputted is a trigger frame as data 0. A predetermined number of image frames after the first trigger signal input are video-recorded, and then video recording in the segment 0 is finished. The segment 0 is switched to a segment 1, and writing into the segment 1 is performed.

As the image frame based on the first trigger signal, image frames respectively corresponding to a required number of image frame information previously set by the video-recorded image frame number setting unit are recorded as data 0 by the image frame management means 12.

During the video recording in the current segment 0 after the first trigger signal input, a delay state occurs by the delay management means 13a.

A second trigger signal is inputted during the video recording in the segment 0 after the first trigger signal input (a delay state). Accordingly, the overlapping management means 13b determines that an overlapping state occurs, so that the video recording in the segment 0 is stopped. When the segment 0 shifts in writing to the next segment 1, a pseudo trigger signal is inputted into the next segment 1.

The delay state due to the first trigger signal input is resolved when the segment shifts to the next segment.

The overlapping state is also resolved when a pseudo trigger signal is inputted into the next segment.

In the next segment 1, the pseudo trigger signal is inputted. Accordingly, a delay state occurs by the delay management means 13a.

In the next segment 1, only a predetermined number of image frames set in the video recording stop unit are video-recorded on the basis of the pseudo trigger signal, and then the video recording stop unit stops the video recording. The next segment 1 shifts to the further next segment 2, and writing is performed in a ring buffer shape into the next segment 2.

As the image frame based on the second trigger signal, image frames respectively corresponding to a required number of image frame information are recorded as data 1 by the image frame management means 12.

In this case, the image frames in the segment 1 are not enough. Accordingly, the image frames recorded in the segment 0 are added thereto so that the data 1 is generated.

The delay state due to the pseudo trigger signal input is resolved when the segment 1 shifts to the next segment 2.

In the next segment 2 into which writing is performed in a ring buffer shape, when a third trigger signal is inputted, an overlapping state does not occur. Accordingly, only a predetermined number of image frames set in the video recording stop unit are video-recorded as usual, and then the video stop unit stops the video recording. The next segment 2 shifts to the further next segment 3, and writing is performed into the further next segment 3.

As the image frames based on the third trigger signal, image frames respectively corresponding to a required number of image frame information are recorded as data 2 by the image frame management means 12.

The image frames based on the third trigger signal include only the image frames recorded in the segment 2.

Due to the third trigger signal input, a delay state occurs by the delay management means 13a in the segment 2.

When the segment 2 shifts to the next segment 3, the delay state is resolved.

In the segment 3, when a fourth trigger signal is inputted, an overlapping state has not occurred. Accordingly, a predetermined number of image frames set in the video recording stop unit are video-recorded as usual, and then the video recording stop unit stops the video recording.

At a time point where the writing into the segment 3 is finished, writing into the segments may be finished, or writing into the segment 0 may be started.

As the image frames based on the fourth trigger signal, image frames respectively corresponding to a required number of image frame information are recorded as data 3 by the image frame management means 12.

In this case, the image frames in the segment 3 are not enough. Accordingly, the image frames recorded in the segment 2 are added thereto so that the data 3 is generated.

Due to the fourth trigger signal input, a delay state occurs by the delay management means 13a in the segment 3. Then, when a new trigger signal is inputted, an overlapping state occurs by the overlapping management means 13b. When the segment 3 shifts to the next segment, the delay state is resolved.

According to the present invention, no image frame is missed for each trigger signal input.

### Second Embodiment

The first embodiment is an example in which the predetermined number of image frames set in the video recording stop unit are video-recorded and then the video recording is stopped in each of the segments and the segment shifts in writing to the next segment.

In a second embodiment, in each of segments, a video recording stop unit in a video recording unit 6 is provided with a determination unit that determines, when a predetermined number of image frames set in the video recording stop unit are video-recorded in the segment, whether or not there is a region where video recording has not been performed (a video recording uncompleted region) in the segment, for example. The video recording stop unit stops, when the determination unit determines that there is no video recording uncompleted region, the video recording when the predetermined number of image frames previously set are video-recorded, and stops, when the determination unit determines that there is a video recording uncompleted region, the video recording after the image frames are written up to the video recording uncompleted region, i.e., after a maximum number of image frames that can be recorded in the segment are video-recorded in the segment in a range where overwriting is not performed.

In this case, the video recording uncompleted region can be eliminated, thereby making it possible to effectively utilize a video recording memory 5.

Required numbers of image frames respectively preceding and succeeding a trigger frame into which a trigger signal is inputted, which are set by a video-recorded image frame number setting unit, are recorded.

When the video recording stop unit in the video recording unit 6 stops, after the determination unit determines that there is a video recording uncompleted region and the maximum number of image frames that can be recorded in the segment are video-recorded, the video recording, all the image frames may be able to be recorded even if a next trigger signal is inputted in the segment so that a pseudo trigger signal need not be inputted into the next segment.

That is, when one sequence of writing into the current segment is not completed, and a total number of a trigger frame related to a trigger signal finally inputted in the segment and image frames after the trigger signal input does not exceed a total number of image frames in the segment, all desired image frames can be video-recorded (left) in the segment without a pseudo trigger signal being inputted (issued).

A pseudo trigger signal input means 13 may be provided with pseudo trigger signal input determination means for determining whether or not a pseudo trigger signal is inputted into the next segment.

### Description of Second Embodiment of Invention Using Case Where Image Frame Information is Position in Segment

For example, in the first embodiment, the video recording stop unit stops, after the predetermined number of image frames succeeding the trigger frame into which the trigger signal is inputted are written, the video recording in the segment B, as illustrated in FIG. 5. Accordingly, video recording into the image frame regions [B5] to [B9] in the segment B has not been performed.

Therefore, the segment B shifts to the next segment without the regions being utilized. Accordingly, in the second embodiment, in order to effectively utilize a memory, if a trigger signal is inputted into an image frame region [B0] in a segment B, when a predetermined number of image frames (five image frames including a trigger frame) set by the video recording stop unit are video-recorded, i.e., when the image frame corresponding to an image frame region [B4] is video-recorded, there are still video recording uncompleted regions ([B6] to [B9]). Accordingly, the determination unit determines that there is a video recording uncompleted region, and the video recording stop unit does not finish the video recording in the image frame region [B4] but stops, after writing is performed up to the end (i.e., [B9]) of a ring buffer, writing the image frames, as illustrated in FIG. 14. The segment B shifts to the next segment "C", as illustrated in FIG. 6.

For example, in the first embodiment, when the trigger signal is inputted at the timing at which the image frame is written into the image frame region [A8] in the segment A, as illustrated in FIG. 3, the video recording is stopped in the image frame region [A2], and the required image frames respectively remain in the image frame regions [A0] to [A9], as illustrated in FIG. 3. However, in the second embodiment, there is no video recording uncompleted region either at a time point where video recording is stopped in an image frame region [A2]. Accordingly, the determination unit determines that there is no video recording uncompleted region, and the video recording stop unit stops the video recording in the image frame region [A2], and required image frames respectively remain in image frame regions [A0] to [A9].

### Description of Second Embodiment of Invention Using Case Where Image Frame Information is Sequence Number

In the first embodiment, video recording into the image frame regions [B5] to [B9] in the segment B has not been performed, as illustrated in FIG. 11.

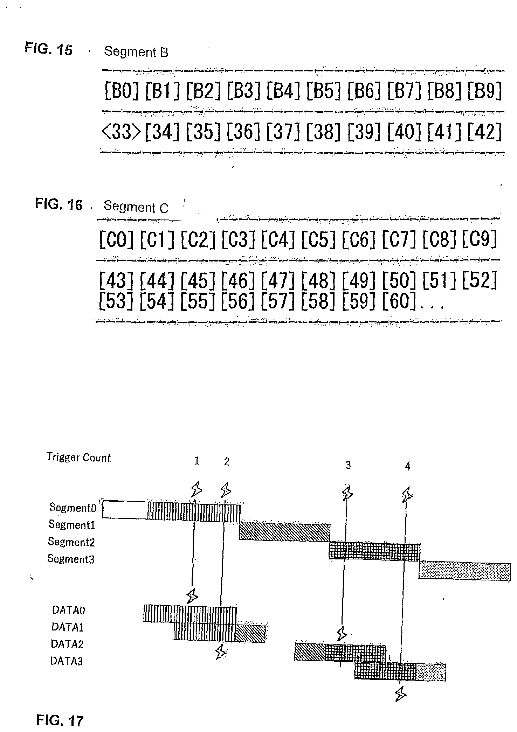

Therefore, the segment B shifts to the next segment without the regions being utilized. Accordingly, in the second embodiment, in order to effectively utilize a memory, even if a trigger signal is inputted into a sequence number <33>, the video recording stop unit does not finish writing in the image frame region [B4] corresponding to a sequence number [37] but stops, after writing is performed up to the end (i.e., [42]) of a ring buffer, writing the image frames, as illustrated in FIG. 15, as described above. The segment B shifts to the next segment C, as illustrated in FIG. 16.

If there is no video recording uncompleted region at a time point where video recording is stopped, the video recording stop unit stops the video recording at the time point, like when the image frame information is described at a position in a segment.

### Description Based on Frame Data in Second Embodiment of Invention

FIG. 17 is a diagram illustrating image frame data recorded in each of segments when each trigger signal is inputted into the segment in a new method according to the second embodiment of the present invention. A video recording operation by trigger signal input into each of the segments will be specifically described with reference to the drawings.

All image frames in each of the segments are video-recorded without depending on a trigger signal input timing, thereby making it possible to use a video recording memory without any waste.

An example in which such setting is performed that the same numbers of image frames can be respectively video-recorded before and after the trigger signal input, the number of the segments is set to four, and the trigger signal input is performed four times is illustrated. Periods during which video recording is performed in each of the segments are respectively indicated by a segment 0 to a segment 3. A patterned portion remains as a video recording memory, and an unpatterned portion indicates that images have been erased by being overwritten. Video recording data to be managed as a shooting scene are respectively indicated by data 0 to data 3.

In the second embodiment, when the determination unit determines that there is a video recording uncompleted region even after required image frames are video-recorded, unlike in the first embodiment, each of segments is set to shift to the next segment after a maximum number of image frames, which can be recorded (up to a range where overwriting is not performed) in the segment, are video-recorded.

As illustrated in FIG. 17, in the new method, each of the segments and the shooting scene do not necessarily match each other.

First, images are written in a ring buffer shape into a segment 0. An image frame into which a first trigger signal is inputted is a trigger frame as data 0. A predetermined number of image frames after the first trigger signal input are video-recorded, and then video recording in the segment 0 is finished. The segment 0 is switched to a segment 1, and writing into the segment 1 is performed.

As the image frame based on the first trigger signal, image frames respectively corresponding to a required number of image frame information previously set by the video-recorded image frame number setting unit are recorded as data 0 by image frame management means 12.

During the video recording in the current segment 0 after the first trigger signal input, a delay state occurs by the delay management means 13.

A second trigger signal is inputted during the video recording in the segment 0 after the first trigger signal input (a delay state). Accordingly, the overlapping management means 13b determines that an overlapping state occurs. When the video recording in the segment 0 is stopped, and the segment 0 shifts in writing to the next segment 1, then a pseudo trigger signal is inputted into the next segment 1.

The delay state due to the first trigger signal input is resolved when the segment shifts to the next segment.

The overlapping state is also resolved when a pseudo trigger signal is inputted into the next segment.

In the next segment 1, the pseudo trigger signal is inputted. Accordingly, a delay state occurs by delay management means 13a.

In the next segment 1, only a predetermined number of image frames set in the video recording stop unit are video-recorded on the basis of the pseudo trigger signal. However, there is a video recording uncompleted region in the segment 1. Accordingly, the determination unit determines that there is a video recording uncompleted region. The video recording stop unit stops, after all image frames are video-recorded, the video recording. The next segment 1 shifts to the further next segment 2, and writing is performed into the next segment 2.

As the image frames based on the second trigger signal, image frames respectively corresponding to a required number of image frame information previously set by the video-recorded image frame number setting unit are recorded as data 1 by the image frame management means 12.

In this case, the image frames in the segment 0 are not enough. Accordingly, the image frames recorded in the segment 1 are added thereto so that the data 1 is generated.

The delay state due to the pseudo trigger signal input is resolved when the segment 1 shifts to the next segment 2.

In the next segment 2, when a third trigger signal is inputted, only a predetermined number of image frames set in the video recording stop unit are video-recorded. However, there is a video recording uncompleted region in the segment 2. Accordingly, the determination unit determines that there is a video recording uncompleted region. The video recording stop unit stops, after all image frames are video-recorded, the video recording. The next segment 2 shifts to the further next segment 3, and writing is performed into the further next segment 3.

As the image frames based on the third trigger signal, image frames respectively corresponding to a required number of image frame information are recorded as data 2 by the image frame management means 12.

In this case, the image frames in the segment 2 are not enough. Accordingly, the image frames recorded in the segment 1 are added thereto so that the data 2 is generated.

Due to the third trigger signal input, a delay state occurs by the delay management means 13a in the segment 2.

In the segment 2, when a fourth trigger signal is inputted, the trigger signal is inputted during the video recording in the segment 2 after the third trigger signal input (a delay state). Accordingly, the overlapping management means 13b determines that an overlapping state occurs. When the video recording in the segment 2 is stopped, and the segment 2 shifts in writing to the next segment 3, then a pseudo trigger signal is inputted into the next segment 3.

As the image frames based on the fourth trigger signal, image frames respectively corresponding to a required number of image frame information are recorded as data 3 by the image frame management means 12.

In this case, the image frames in the segment 2 are not enough. Accordingly, the image frames recorded in the segment 3 are added thereto so that the data 3 is generated.

The delay state due to the fourth trigger signal input is resolved when the segment 2 shifts to the next segment 3.

The overlapping state is also resolved when a pseudo trigger signal is inputted in the next segment.

In the segment 3, only a predetermined number of image frames set in the video recording stop unit are video-recorded on the basis of the pseudo trigger signal. However, there is a video recording uncompleted region in the segment 3. Accordingly, the determination unit determines that there is a video recording uncompleted region. The video recording stop unit stops, after all image frames are video-recorded, the video recording. The segment 3 shifts to the segment 0, as needed.

As described above, no image frame is missed for each trigger signal input, like in the first embodiment.

## Claims

1. A high-speed camera comprising:
an imager unit that sequentially images a target video image at a set exposure timing;
a video recording memory that is divided into a plurality of segments, each of the segments consecutively shifting to the next segment in order so that writing is performed thereinto, the writing into each of the segments being performed and overwriting is performed in a ring buffer shape until the writing is stopped;
a video recording unit that sequentially video-records the video image imaged by the imager unit as an image frame of digital data into the video recording memory and stops, when video-recording a predetermined number of image frames set in a video recording stop unit, the video recording in the video recording memory using the video recording stop unit on the basis of input of a trigger signal, to leave the predetermined number of image frames in the video recording memory;
a video-recorded image frame number setting unit in which predetermined numbers of image frames, respectively preceding and succeeding the image frame at the time when the trigger signal is inputted, to be recorded on the basis of the input of the trigger signal are previously set;
region information management means for storing segment information about in which of the segments the image frames are recorded and image frame information about in which of positions of each of the segments each of the image frames is recorded; and
image frame management means for acquiring predetermined numbers of image frames respectively preceding and succeeding the image frame at the time when the trigger signal is inputted in the certain segment, which are previously set by the video-recorded image frame number setting unit, on the basis of image frame information of the segment into which the trigger signal is inputted and image frame information of the other segment that are stored by the region information management means.

2. The high-speed camera according to claim 1, wherein
the image frame information is a position of each of the image frames in each of the segments,
the region information management means is configured to store, for each of the segments, a position in the segment of each of the image frames recorded in the segment after the stop of the video recording, and
the image frame management means is configured, in order to acquire the predetermined numbers of image frames respectively preceding and succeeding the trigger frame at the time when the trigger signal is inputted, which are previously set by the video-recorded image frame number setting unit, to supplement, in addition to a position of each of the image frames in the segment into which the trigger signal is inputted, which are stored by the region information management means, a position of the image frame that cannot be video-recorded in the segment including the trigger frame with a position of each of image frames in the other segment.

3. The high-speed camera according to claim 1, further comprising
sequence number management means for assigning a sequence number in order to each of the image frames sequentially video-recorded in each of the segments that consecutively shifts to the next segment so that video recording is sequentially performed therein, wherein
the image frame information is a sequence number assigned for each of the segments by the sequence number management means,
the region information management means is configured to store, for each of the segments, a sequence number assigned to each of the image frames recorded in the segment after the stop of the video recording, and
the image frame management means is configured, in order to acquire the predetermined numbers of image frames respectively preceding and succeeding the trigger frame at the time when the trigger signal is inputted, which are previously set by the video-recorded image frame number setting unit, to supplement, in addition to a sequence number assigned to each of the image frames in the segment into which the trigger signal is inputted, which are stored by the region information management means, a sequence number assigned to the image frame that cannot be video-recorded in the segment including the trigger frame with a sequence number assigned to each of image frames in the other segment.

4. The high-speed camera according to claim 1, further comprising pseudo trigger signal input means for issuing, when trigger signals are inputted in an overlapping manner and each of the segments consecutively shifts to the next segment, a pseudo trigger signal to the video recording unit.

5. The high-speed camera according to claim 4, wherein
the pseudo trigger signal input means includes
delay management means for causing, when the first trigger signal is inputted in each of the segments, a delay state and resolving, when video recording in the current segment during video recording is stopped, the delay state, and
overlapping management means for causing, when the new trigger signal is inputted during the delay state, an overlapping state, stopping the video recording in the current segment during video recording, inputting a pseudo trigger signal into the video recording unit when the current segment consecutively shifts in video recording to the next segment, and resolving, when the pseudo trigger signal is inputted, the overlapping state.

6. The high-speed camera according to any one of claims 1 to 5, wherein the predetermined number of image frames set in the video recording stop unit are set to a required number of image frames succeeding the image frame at the time when the trigger signal is inputted, which are previously set by the video-recorded image frame number setting unit.

7. The high-speed camera according to claim 1, wherein
the video recording stop unit is provided with a determination unit that determines, when the predetermined number of image frames set in the video recording stop unit are video-recorded in the segment, whether or not there is a region where video recording has not been performed in the segment,
the video recording stop unit stops, when the determination unit determines that there is no region where video recording has not been performed, the video recording when the predetermined number of image frames set in the video recording stop unit are video-recorded, and
the video recording stop unit is set to stop, when the determination unit determines that there is a region where video recording has not been performed, the video recording after the predetermined number of image frames are written up to the region where video recording has not been performed.

8. The high-speed camera according to claim 4 or 5, wherein the pseudo trigger signal input means is provided with pseudo trigger signal input determination means for determining whether or not a pseudo trigger signal is inputted into the next segment.

9. The high-speed camera according to claim 4 or 5, wherein
the video recording stop unit is provided with a determination unit that determines, when the predetermined number of image frames set in the video recording stop unit are video-recorded in the segment, whether or not there is a region where video recording has not been performed in the segment,
the video recording stop unit stops, when the determination unit determines that there is no region where video recording has not been performed, the video recording when the predetermined number of image frames set in the video recording stop unit are video-recorded,
the video recording stop unit is set to stop, when the determination unit determines that there is a region where video recording has not been performed, the video recording after the predetermined number of image frames are written up to the region where video recording has not been performed, and
the pseudo trigger signal input means is provided with pseudo trigger signal input determination means for determining whether or not a pseudo trigger signal is inputted into the next segment.
